# EUROPEAN PATENT APPLICATION

(11) **EP 1 873 705 A1**
(43) Date of publication of application: **02.01.2008**
(21) Application number: 06116420.8
(22) Date of filing: 30.06.2006
(51) Int. Cl.: G06Q 30/00, G07G 1/00, G01G 19/00

(54) **System for facilitating the handling of goods based on shopping carts equipped with a RFID tag**

(71) Applicant: International Business Machines Corporation, Armonk, NY 10504 (US)
(72) Inventor: Clement, Jean-Yves, 06640, Saint-Jeannet (FR); Bauchot, Frederic, 06640, Saint-Jeannet (FR); Marmigere, Gerard, 06340, Drap (FR); Samtmann, Christophe, 06000, Nice (FR)
(74) Representative: Etorre, Yves Nicolas

(57) **Abstract**

The present invention discloses methods, systems and computer programs to make personal shopping baskets or shopping carts compatible with fraud detection systems already in place in RFID cash registers. To prevent that a malevolent customer removes or masks RFID labels, shopping carts are weighed with their content. This operation supposes that all shopping carts of a same store are identical and have the same weight. After subtraction of the weight of the shopping cart from the total weight, the weight of the content is correlated with the list of the articles detected by the RFID reader of the cash register. In the context of the present invention where personal baskets and personal shopping carts are not identical, it is necessary first to identify them in order to compute the exact weight of the content. To recognize a shopping cart among the thousands of shopping carts present in a store, the use of the RFID technology is a very simple and very efficient solution. A RFID tag is integrated in the structure of the basket or the shopping cart in order to improve the fraud detection system. It is also possible to include in the RFID tag, information like the weight, size, color, type, form, ..... of the shopping cart or basket.

## Description

### Field of the invention

The present invention relates to stores and supermarkets equipped with Radio Frequency Identifier (RFID) tags and more particularly to a method and system for facilitating the handling of goods based on shopping carts equipped with a RFID tag.

### Background of the invention

The use of the RFID (Radio Frequency iDentifier) technology in supermarkets brings a great effectiveness regarding the cashing speed. This is possible due to the fact that it is no more necessary to read individually each article on a conveyor. The content of the shopping cart can be identified on the fly without removing the articles that the customer put inside. Nevertheless some handlings remain tiresome for the customer: to put the articles in the bags, to deposit the bags in the boot of the car, to carry the bags from the car to the house

The problem is the following : when a consumer goes shopping in a supermarket, he is obliged to take the articles on the shelves and to put them in a shopping cart, to transfer them from the shopping cart to a cash register conveyor, to put them in paper or plastic bags and to put the bags in the shopping cart, to transport the bags to the car, to return the empty shopping cart back to the store... In fact, there is a real need to optimize and to facilitate all these handling operations using the RFID technology in place in stores or supermarkets.

### Objects of the invention

The object of the present invention is to facilitate the handling of goods for supermarket customers by limiting the number of handling operations.

Another object of the present invention is to take advantage of the existing RFID technology in large stores and supermarkets.

Another object of the present invention is to enable large stores or supermarket to use different types of shopping carts or baskets.

Another object of the present invention is to enable customer to use their own shopping cart, basket or bags in large stores or supermarkets.

Another object of the present invention is to make any kind of shopping cart, basket or bag compatible with fraud detection systems associated with RFID cash registers.

Another object of the present invention is to pass a weight checking system at a cash register without emptying the shopping cart.

### Summary of the invention

The present invention is directed to methods, systems and computer programs as defined in independent claims.

The present invention discloses a method of weighing RFID tagged articles in different kinds of container without emptying said containers. The method comprises the step of:
- measuring and checking, the weight of each empty container by comparing the measured weight with a reference weight, said step comprising for each container the steps of:
   - identifying the container by reading the code of a RFID tag integrated in the container, each container having a unique RFID code;
   - retrieving a reference weight corresponding to the empty container; this reference weight being associated with the RFID code;
   - measuring the weight of the empty container;
   - comparing the measured weight with the reference weight of the empty container;
   - if the measured weight and the reference weight of the empty container are not significantly different:
      - authorizing the access of the container, said step comprising the further step of:
         - recording the authorization of the container.

The present invention discloses a method of weighing RFID tagged articles in different kinds of container without emptying said containers, said method, comprising the step of:
- measuring and checking the weight of tagged articles in containers, said step comprising for each container the further steps of:
   - identifying the container by reading the code of a RFID tag integrated in the container, each container having a unique RFID code;
   - measuring the weight of the container with its content;
   - retrieving a weight corresponding to the empty container; said weight being associated with the RFID code;
   - determining the real weight of the content by subtracting the retrieved weight of the empty container from the measured weight of the container with its content;
   - computing a theoretical weight for the content by summing a theoretical weight associated with each tagged article detected in the container; each tagged article being associated with a theoretical weight;
   - comparing the theoretical weight with the real weight of the content;
   - if the theoretical weight and the real weight are not significantly different, accepting the content of the container.

Further embodiments of the invention are provided in the appended dependent claims.

This invention has many advantages as will be explained further below.

The foregoing, together with other objects, features, and advantages of this invention can be better appreciated with reference to the following specification, claims and drawings.

### Brief description of the drawings

The new and inventive features believed characteristics of the invention are set forth in the appended claims. The invention itself, however, as well as a preferred mode of use, further objects and advantages thereof, will best be understood by reference to the following detailed description of an illustrative detailed embodiment when read in conjunction with the accompanying drawings, wherein:
- **Figure 1** compares the current way of handling goods with the way of handling goods according to the present invention.
- **Figure 2** shows a shopping cart with retractable wheels.
- **Figure 3** is a general view of the system according to the present invention.
- **Figure 4** is a flow chart of the method of measuring and checking the weight of an empty shopping cart at a store entrance according to the present invention.
- **Figure 5** is a flow chart of the method of measuring and checking the weight of tagged articles in a shopping cart at a cash register according to the present invention.

### Preferred embodiment of the invention

### Principles of the invention

The present invention propose another way to handle goods in supermarkets equipped with RFID technology.

The main object of this invention is to limit the number of time the customer will have to handle the goods he/she buys. According to the present invention, supermarket customers will have to handle the goods they buy only twice :
- a first time to take the goods on the shelves and to put them into the shopping cart.
- a second time to take the goods from the shopping cart and to put them into the fridge (as long as bags or containers are not directly stackable in the fridge).

The proposed solution for limiting the handling of goods, is based on the commercialization of personal RFID rolling boxes, shopping baskets, bags, rolling suitcases, supermarket shopping carts (preferably with retractable wheels to fit with the boot of the car), or any kind of container easy to bring back home and comprising an integrated RFID tag. According to the present invention, each customer has it own shopping cart or basket in order to limit the handling of goods. Customers have the possibility to bring back their personal shopping carts or baskets at home and to put them directly in the refrigerator (or in the cupboard). The idea is to make the shopping cart (or basket) a personal object belonging to the customer. It is also possible to have containers the content of which is predetermined (meat, vegetable, cold conservation or at ambient temperature) and which can be placed directly in the refrigerator.

To allow the personal shopping baskets or shopping carts to be compatible with the fraud detection systems already in place in RFID cash registers, it is necessary for these cash registers to know exactly the weight of these shopping carts and baskets. Today to prevent that a malevolent customer removes or masks RFID labels, shopping carts are weighed with their content. This operation supposes that all shopping carts of a same store are identical and have the same weight. After subtraction of the weight of the shopping cart from the total weight, the weight of the content is correlated with the list of the articles detected by the RFID reader of the cash register. In the context of the present invention where personal baskets and personal shopping carts are not identical, it is necessary first to identify them in order to compute the exact weight of the content. To recognize the shopping cart of Mr. Smith among the thousands of shopping carts present in a store, the use of the RFID technology is a very simple and very efficient solution. The RFID tag can be integrated in the structure of the basket or the shopping cart in order to improve the fraud detection system. It is also possible to include in the RFID tag in addition to a serial number, information like the weight, size, color, type, form, ... of the shopping cart or basket.

### RFID systems

According to the present invention, a Radio Frequency IDentifier (RFID) tag is integrated within each basket or shopping cart.

The core of any RFID system is the 'Tag' or 'Transponder', which can be attached to or embedded within objects, wherein data can be stored. An RFID reader, generically referred to as reader in the following description, sends out a radio frequency signal to the RFID tag that broadcasts back its stored data to the reader. The system works basically as two separate antennas, one on the RFID tag and the other on the reader. The read data can either be transmitted directly to another system like a host computer through standard interfaces, or it can be stored in a portable reader and later uploaded to the computer for data processing. An RFID tag system works effectively in environments with excessive dirt, dust, moisture, and/or poor visibility. It generally overcomes the limitations of other automatic identification approaches.
Several kinds of RFID, such as piezoelectric RFID and electronic RFID, are currently available. For example, passive RFID tags do not require battery for transmission since generally, they are powered by the reader using an induction mechanism (an electromagnetic field is emitted by the reader antenna and received by an antenna localized on the RFID tag). This power is used by the RFID tag to transmit a signal back to the reader, carrying the data stored in the RFID tag. Active RFID tags comprise a battery to transmit a signal to a reader. A signal is emitted at a predefined interval or transmit only when addressed by a reader.

When a passive High Frequency (HF) RFID tag is to be read, the reader sends out a power pulse to the RFID antenna. The electro-magnetic field generated is 'collected' by the antenna in the RFID tag that is tuned to the same frequency. When the power pulse has finished, the RFID tag immediately transmits back is data. This data is picked up by the receiving antenna and decoded by the reader.

RFID tags can be read-only, write-once, or read-write. A read-only RFID tag comprises a read-only memory that is loaded during manufacturing process. Its content can not be modified.

### Detailed description of the invention

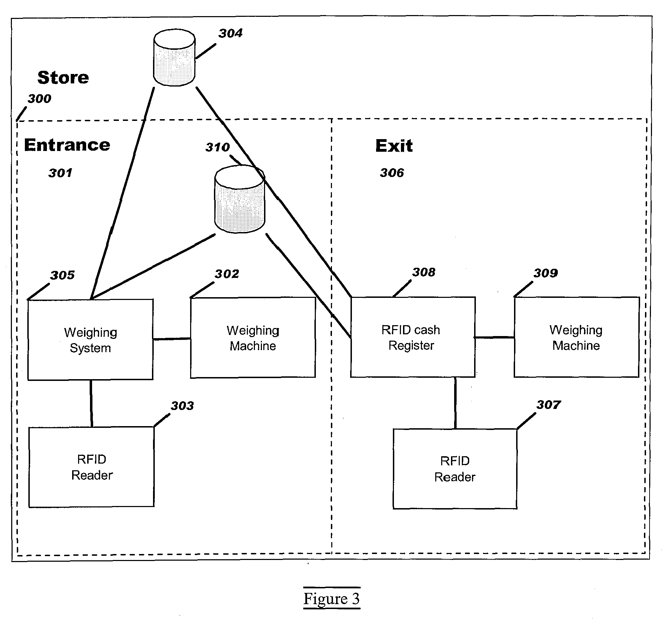

Figure 3 is a general view of the system according to the present invention.

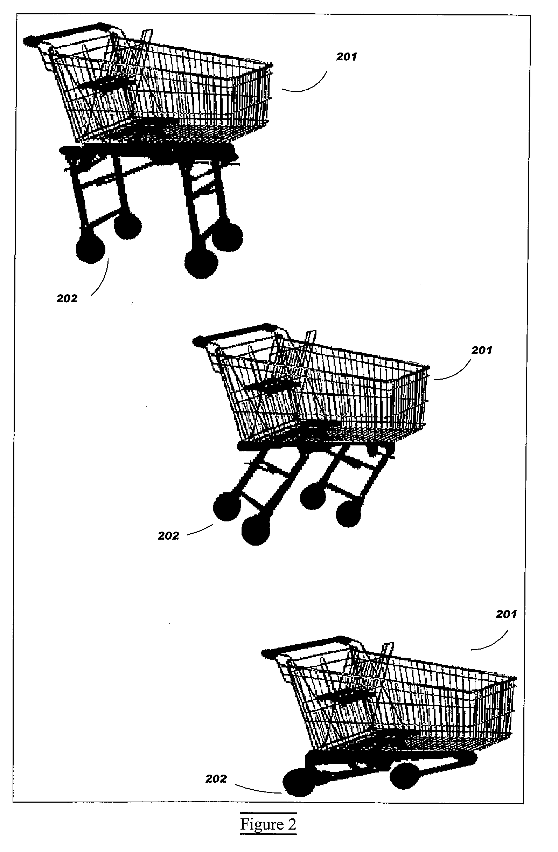

A customer arrives with his/her car on the car park of the supermarket, takes out his/her basket and fixes it on a rolling support with a flat top. In a particular embodiment, the rolling support is provided by the store. In another embodiment, the basket or container (201) has its own system of retractable wheels (202) as shown in Figure 2.

### Measuring and checking the weight of empty shopping carts at the entrance of the store

The customer comes into the store and puts his/her shopping cart on a RFID weighing machine. Instantaneously the RFID weighing system (305) checks that the measured weight is in accordance with the shopping cart model and possibly recognizes its form.

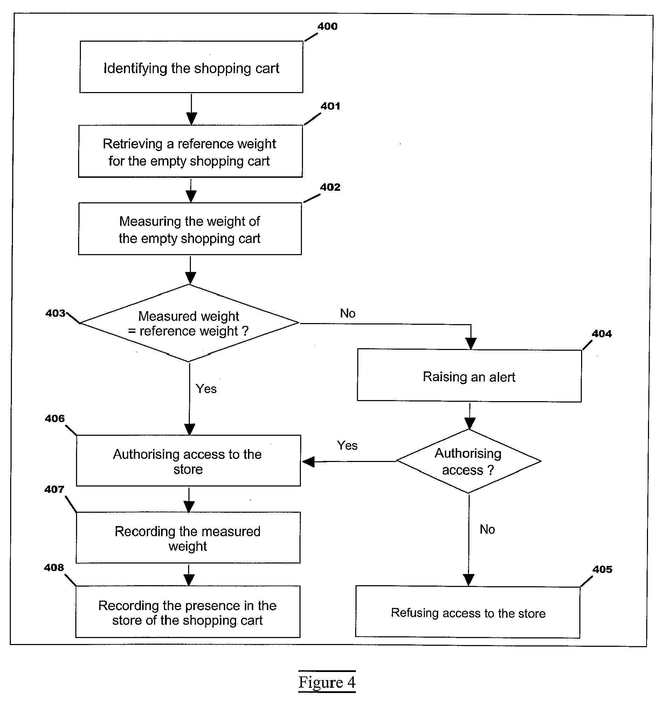

As shown in Figure 4, the method of measuring and checking the weight of the empty shopping cart at the entrance (301) of the store (300) comprises the steps of :
- identifying (400) the shopping cart of the customer by reading (by means of a RFID reader (303)) the code of the RFID tag integrated in his/her shopping cart, each shopping cart having a unique RFID code. In a preferred embodiment, the RFID tag is a passive read only RFID tag that cannot be modified by the customer.
- retrieving (401) the reference weight of the empty shopping cart (original weight of the shopping cart specified and/or certified by the manufacturer). In a preferred embodiment, the reference weight is written in the RFID tag integrated in the shopping cart (it cannot be modified by the customer) and is retrieved by means of the RFID reader (303). In another embodiment, the reference weight is stored with the RFID code in a first (local or remote) data base (304) and is retrieved from this first data base (304).
- measuring (402) the weight of the empty shopping cart (by means of an electronic weighing machine (302)).
- comparing (403) the measured weight with the reference weight of the empty shopping cart.
- if the measured weight and the reference weight of the empty shopping cart are significantly different (a weight margin can be defined by the manufacturer of the shopping cart or by the store) :
   - raising (404) an alert and recording the anomaly.
   - refusing (405) the access of the shopping cart in the store (300); or
   - authorizing (406) the access of the shopping cart in the store. In this last case, the process includes the further steps of:
      - recording (407) the measured weight.
      - recording (408) the presence in the store of the shopping cart.
- if the measured weight and the reference weight of the empty shopping cart are not significantly different:
   - authorizing (406) the access of the shopping cart in the store.
   - recording (407) the measured weight in a second data base (310) accessible by one or a plurality of cashing registers at the exit of the store.
   - recording (408) the presence in the store of the shopping cart in the second data base 310.

Let us consider a customer intending to cheat. This customer arrives at the entrance of the store and artificially increase the weight of his/her shopping cart for example with metal masses or bags of water that he will empty in the store. The weighing system at the entrance of the store measures the weight of the shopping cart and compares the measured weight with the manufacturer specifications. The manufacturer specifications may be stored in a local or remote data base. In an particular embodiment the weighing system checks the manufacturer specifications in a centralized database shared by a plurality of stores or manufacturers. In the present case, since the measured weight is different from the specified weight, the weighing system will immediately detect an anomaly and will trigger an alert.

An advantage of the present invention is to avoid that a malicious customer leaves for example his wallet inside the shopping cart when this shopping cart is weighed. The presence of the wallet will generate an abnormal weight that will be easily detected by the weighing system placed at the entrance of the store.

The customer himself/herself can also be identified by means of his/her shopping cart. In this case, depending on his/her consumer profile and thanks to the RFID tag integrated in the shopping cart, a personalized guidance can be activated based on the detection and localization of the shopping cat in the store.

### Measuring and checking the weight of tagged articles in the shopping cart at the cash register

After having filled his/her shopping cart, the customer goes to the cash register (308) where all the tagged articles are automatically read in the shopping cart without having to handle them. At the same time, the shopping cart RFID tag is read (by means of a RFID reader (307)) in order to have its reference weight or the weight that has been measured at the store entrance. The weight of the empty shopping cart is subtracted from the total weight of the full shopping cart measured at the cash register (by means of a weighing machine (309)). The resulting weight is correlated with the sum of the theoretical weight of each tagged article detected in the shopping cart. If an article is not detected for any reason (for instance a voluntary or accidental screening of the tag), the measured weight of the content will exceed the computed theoretical weight corresponding to the invoice. With this system any error can be easily detected and corrected.

Since the customer can be identified by means of his/her shopping cart or basket, all the systems of personalized invoicing are possible.

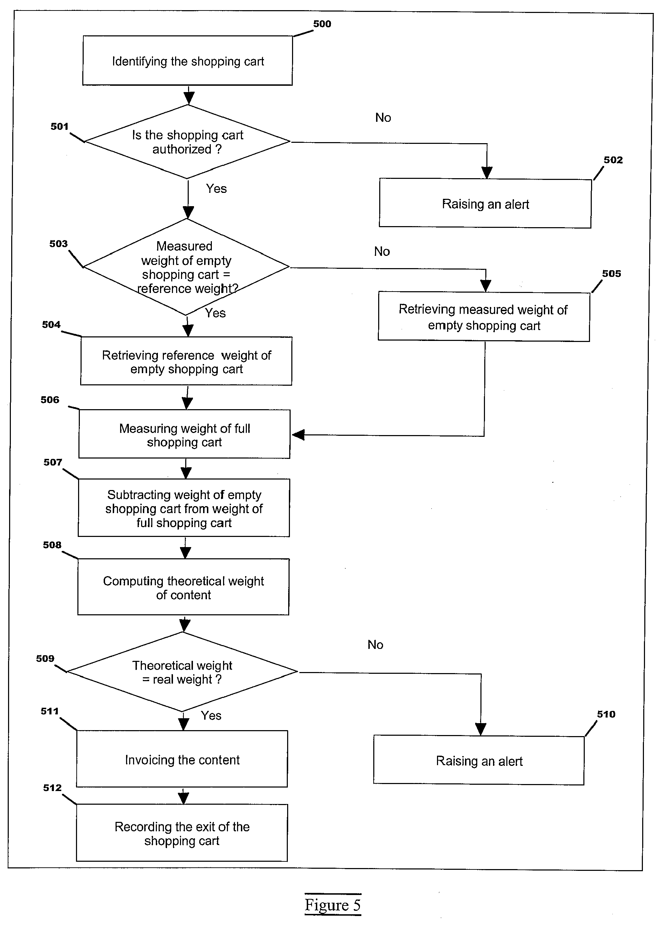

As shown in Figure 5, the method of weighing the full shopping cart at the exit (306) of the store (300) comprises the steps of :
- identifying (500) the shopping cart of the customer by reading (by means of a RFID reader (306)) the code of the RFID tag integrated in his/her shopping cart, each shopping cart having a unique RFID code.
- determining (501) whether or not the shopping cart has been authorized at the entrance of the store. More particularly this step includes the step of checking whether or not an anomaly has been detected and recorded (in the second data base (310)) during the weighing of the empty shopping cart at the entrance of the store:
   - if the shopping cart has been authorized at the entrance of the store, continuing the process.
   - if the shopping cart has not been authorized at the entrance of the store, raising (502) an alert.
- determining (503) from the second data base 310 whether or not the weight of the empty shopping cart previously measured corresponds to the reference weight:
   - if the weight of the empty shopping cart previously measured corresponds to the reference weight, retrieving (504) the reference weight of the empty shopping cart.
      In a preferred embodiment, the reference weight is written in the RFID tag of the shopping cart and is retrieved by means of the RFID reader (306).
      In another embodiment, the reference weight is associated with the RFID code in the first (local or remote) data base (304) and is retrieved from this first data base (304).
   - if the weight of the empty shopping cart previously measured doe not correspond to the reference weight, retrieving (505) from the second data base (310) the weight of the empty shopping cart previously measured and recorded at the entrance of the store; this measured weight being associated with the RFID code in the second data base (310).
- measuring (506) the weight of the full shopping cart (by means of an electronic weighing machine (309));
- determining (507) the real weight of the content by subtracting the retrieved weight of the empty shopping cart from the total weight of the full shopping cart measured at the cash register (308);
- computing (508) a theoretical weight for the content by summing the theoretical weight of each article detected in the shopping cart; each tagged article in the store being associated with a theoretical weight.
- comparing (509) the theoretical weight with the real weight of the content;
- if the theoretical weight and the real weight are significantly different (a weight margin can be defined) :
   - raising (510) an alert and recording an anomaly;
- if the theoretical weight and the real weight are not significantly different:
   - invoicing (511) the content.
   - recording (512) the exit of the shopping cart in the second data base (310).

### Advantages

### Advantages for the customer

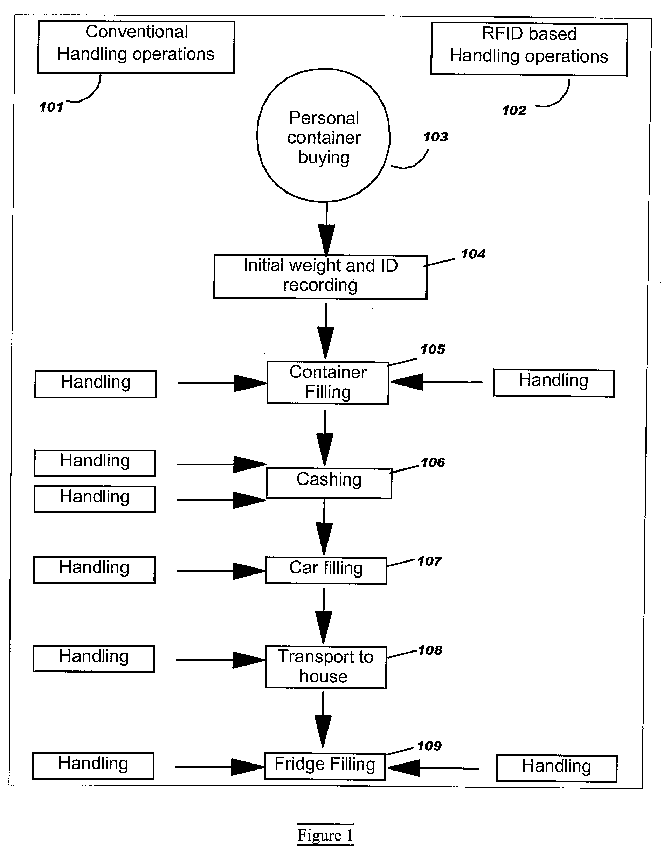

Figure 1 clearly shows the advantages of the present invention for the customer. In the left side of Figure 1 are listed the handling operations (101) that are required in the current environment. In right side of Figure 1 are listed the handling operations (102) that are required in an environment as described in the present invention. It is clear that the number of handling operation is significantly reduced thanks to the present invention.

As illustrated in Figure 1, the present invention is based on the following scenario:
- (103) First the customer has to buy or rent a personal container (shopping cart, basket, bag ...).
- (104) This container must comprise a RFID with an unique code. This code must be registered so that the container can be identified. The reference weight of the empty container must also be registered jointly with the RFID code.

When the customer goes shopping with his/her container:
- (105) The customer fills his container with tagged articles. This operation is not affected by the present invention.
- (106) At the cash register, articles do not need to be put on the conveyor and then in bags.
- (107) The whole container can be placed in the boot of the car without handling the articles.
- (108) Once arrived at home, the contained is transported from the car to the house with all the articles inside.
- (109) Articles are placed in the refrigerator or in the cupboard. It is also possible to place the whole container with the articles inside in the refrigerator or cupboard.

### Advantages for the store

The main advantage of the present invention for the store is to make different kind of containers compatible with their RFID fraud detection system already in place and in particular to enable customers to use their own container (shopping cart, basket, bag, ...).

While the invention has been particularly shown and described with reference to a preferred embodiment, it will be understood that various changes in form and detail may be made therein without departing from the spirit, and scope of the invention.

## Claims

1. The method of weighing RFID tagged articles in different kinds of container without emptying said containers, said method comprising the step of:
• measuring and checking, the weight of each empty container by comparing the measured weight with a reference weight, said step comprising for each container the steps of:
• identifying (400) the container by reading the code of a RFID tag integrated in the container, each container having a unique RFID code;
• retrieving (401) a reference weight corresponding to the empty container; said reference weight being associated with the RFID code;
• measuring (402) the weight of the empty container;
• comparing (403) the measured weight with the reference weight of the empty container;
• if the measured weight and the reference weight of the empty container are not significantly different :
• authorizing (406) an access for the container, said step comprising the further step of:
• recording (408) the authorization of the container.

2. The method according to the preceding claim, wherein the step of measuring and checking the weight of each empty container by comparing the measured weight with a reference weight, is performed at an entrance of a store in order to authorize or refuse the access to the store.

3. The method according to any one of the preceding claims, wherein the step of retrieving (401) a reference weight corresponding to the empty container, comprises the further step of:
• reading the RFID tag of the container and retrieving the reference weight from said RFID tag.

4. The method according to any one of claims 1 to 2, wherein the step of retrieving (401) a reference weight corresponding to the empty container, comprises the further step of:
• retrieving the reference weight from a first data base.

5. The method according to any one of the preceding claims, comprising the further steps of:
• if the measured weight and the reference weight of the empty container are significantly different:
• raising (404) an alert and recording an anomaly;
• refusing (405) the access of the container in the store (300).

6. The method according to any one of claims 1 to 4, comprising the further step of:
• if the measured weight and the reference weight of the empty container are significantly different:
• raising (404) an alert and recording an anomaly;
• authorizing (406) the access of the container in the store, said step comprising the further steps of:
• recording (407) the measured weight;
• recording (408) the authorization of the container to have access to the store.

7. The method according to any one of the preceding claims, wherein the step of, if the measured weight and the reference weight of the empty container are not significantly different, authorizing (406) the access of container in the store, comprises the further step of:
• recording (407) the measured weight.

8. The method according to any one of the preceding claims wherein measured weight, anomaly, authorization are recorded in a second data base providing a shared access to one or multiple cash registers.

9. The method according to any one of the preceding claims wherein the RFID tag of the container is a passive RFID tag which code cannot be modified.

10. The method according to any one of the preceding claims wherein said container is of any kind and can be indifferently a shopping cart, a basket, a bag, a suitcase, a box, ...

11. The method according to any one of the preceding claims wherein the RFID tag of the container is a passive RFID tag comprising information which cannot be modified.

12. A system comprising means adapted for carrying out all the steps of the method according to any one of the preceding claims.

13. A computer program comprising instructions for carrying out the method according to any one of claims 1 to 11, when said computer program is executed on a computer system.

14. A method of weighing RFID tagged articles in different kinds of container without emptying said containers, said method, comprising the step of:
• measuring and checking the weight of tagged articles in containers, said step comprising for each container the further steps of:
• identifying (500) the container by reading the code of a RFID tag integrated in the container, each container having a unique RFID code;
• measuring (506) the weight of the container with its content;
• retrieving (504) a weight corresponding to the empty container; said weight being associated with the RFID code;
• determining (507) the real weight of the content by subtracting the retrieved weight of the empty container from the measured weight of the container with its content;
• computing (508) a theoretical weight for the content by summing a theoretical weight associated with each tagged article detected in the container; each tagged article being associated with a theoretical weight;
• comparing (509) the theoretical weight with the real weight of the content;
• if the theoretical weight and the real weight are not significantly different, accepting (511) the content of the container.

15. The method according to the preceding claim, wherein the step of measuring and checking the weight of tagged articles in containers, is performed at a cash register.

16. The method according to any one of claims 14 to 15, wherein the step of retrieving (504) a weight corresponding to the empty container, comprises the further step of:
• reading the RFID tag of the container and retrieving a reference weight corresponding to the empty container from said RFID tag.

17. The method according to any one of claims 14 to 15, wherein the step of retrieving (504) a weight corresponding to the empty container, comprises the further step of:
• retrieving a reference weight from a first data base.

18. The method according to any one of claims 14 to 15, wherein the step of retrieving (504) a weight corresponding to the empty container, comprises the further step of:
• retrieving a previously measured weight from a second data base.

19. The method according to any one of claims 14 to 18, wherein the step of accepting (511) the content comprises the further step of:
• invoicing the content of the container.

20. The method according to any one of claims 14 to 19 comprising the steps of:
• determining (501) whether or nor the container is authorized;
• if the container is not authorized, raising (502) an alert.

21. The method according to any one of claims 14 to 20 comprising the further step of if the theoretical weight and the real weight are significantly different:
• raising (510) an alert.

22. The method according to any one of claims 14 to 21 wherein the RFID tag of the container is a passive RFID tag which code cannot be modified.

23. A system comprising means adapted for carrying out the method according to any one of claims 14 to 22.

24. A computer program comprising instructions for carrying out the method according to any one of claims 13 to 21 when said computer program is executed on a computer system.

25. A method comprising the steps of any one of claims 1 to 12 and any one of claims 14 to 22.

26. A system comprising the system according to claim 13 and the system according to claim 23.
